# EUROPÄISCHE PATENTANMELDUNG

(11) **EP 2 138 045 A2**
(43) Veröffentlichungstag der Anmeldung: **30.12.2009**
(21) Anmeldenummer: 09008045.8
(22) Anmeldetag: 19.06.2009
(51) Int. Cl.: A21B 1/48

(54) **Ofenschleuse**

(30) Priorität: 24.06.2008 DE 102008029989
(71) Anmelder: GBT GmbH, 44536 Lünen (DE)
(72) Erfinder: Henning, Michael, 58239 Schwerte (DE)
(74) Vertreter: Meinke, Dabringhaus und Partner GbR

(57) **Zusammenfassung**

Mit einer Vorrichtung (1) zum verschließen eines kontinuierlich zu beschickenden Ofens (2), insbesondere eines Durchlaufofens für Backwaren, sollen möglichst einfache, gleichwohl im Wesentlichen gasdichte Ofenschleusen geschaffen werden für den Ein- bzw. Austritt eines kontinuierlichen Förderbandes, z.B. für Backwaren in bzw. aus einem solchen Ofen als technisch einfache Konstruktion, die wirtschaftlich herzustellen und wirtschaftlich im Betrieb ist.

Dies wird dadurch erreicht, dass in einem oberhalb und auf Abstand zum in den Ofen (2) einlaufenden Förderband (4) vorgesehenen Gehäuse (5) mehrere an umlaufenden Antriebsketten (9) befestigte, das Förderband berührende Paddel (14) vorgesehen sind, die innerhalb des Gehäuses (5) oberhalb des Einlaufbandes (2) ebenfalls gasdicht geführt sind.

## Beschreibung

Die Erfindung richtet sich auf eine Vorrichtung zum Verschließen eines kontunierlich zu beschickenden Ofens, insbesondere eines Durchlaufofens für Backwaren.

Durchlauföfen für Backwaren sind in unterschiedlichen Gestaltungen bekannt. Auf die DE 691 12 035 T2 sei als Beispiel hingewiesen oder die DE 44 15 754 A1.

Um beispielsweise den Austritt des erhitzten Mediums oder das Einbringen von Kaltluft in die Backkammer zu vermeiden, sind bei der zuerst genannten DE 691 12 035 T2 am Ein- und Austritt des Ofens Abzüge vorgesehen, die mit den Ofeneinlass- und -auslassöffnungen zusammenwirken, um so auch die Wärmeverluste zu verringern.

Ein nicht unwesentlicher Nachteil derartiger Konstruktionen besteht darin, dass sie vergleichsweise hohe Gebläseleistungen nötig machen, die die Wirtschaftlichkeit einer derartigen Vorrichtung in Frage stellen.

Hier setzt die Erfindung an, deren Aufgabe darin besteht, möglichst einfache, gleichwohl im Wesentlichen gasdichte Ofenschleusen zu schaffen für den Ein- bzw. Austritt eines kontinuierlichen Förderbandes, z.B. für Backwaren in bzw. aus einem solchen Ofen als technisch einfache Konstruktion, die wirtschaftlich herzustellen und wirtschaftlich im Betrieb ist.

Mit einer Vorrichtung der eingangs bezeichneten Art wird diese Aufgabe gemäß der Erfindung dadurch gelöst, dass in einem oberhalb und auf Abstand zum in den Ofen einlaufenden Förderband vorgesehenen Gehäuse mehrere an umlaufenden Antriebsketten befestigte, das Förderband berührende Paddel vorgesehen sind, die innerhalb des Gehäuses oberhalb des Einlaufbandes ebenfalls gasdicht geführt sind.

Durch umlaufende Antriebsketten in einem oberhalb des Ablaufbereiches in den Ofen vorgesehenen Schleusengehäuse ist es möglich, umlaufende, jeweils ein gewisses Gasvolumen vor sich herschiebende Paddel so zu führen, dass diese einen sicheren Ofenabschluss bilden, eventuell auftretende verluste beschränken sich auf das Gasvolumen des Innenraumes zwischen zwei Paddeln. Die erfindungsgemäße Vorrichtung eignet sich auch zum Nachrüsten bestehender Ofenanlagen.

Eine kontinuierlich wirkende Schleuse zeigt auch die GB 235 870, die aber nicht für eine sichere Abdichtung des einlaufenden Bandes sorgt, da bei dichter Bandbelegung die Ein- und Auslaufschieber teilweise gleichzeitig geöffnet sein müssen, es sei denn die Teiglinge haben einen so großen Abstand, dass der vor dem Ofen geförderte Teigling in den Ofen einlaufen kann, woraufhin dann diese Klappe geschlossen werden kann, bevor der nächste Teigling in das System einläuft, so dass das Band nur mit weniger als 50% von Teiglingen belegbar ist.

Eine Drehwalzenschleuse zeigt die DE 472 178, die auf die Teiglingsgröße ausgelegt sein muss. Unterschiedliche Teiglinge lassen sich damit nicht in den Ofen einfahren.

Ausgestaltungen der Erfindung ergeben sich aus den Unteransprüchen. Dabei kann vorgesehen sein, dass die Paddel an in den seitlichen Ketten gelagerten Wellen angeordnet sind.

Um eine sichere stabile Führung der Paddel zu gewährleisten, ist vorgesehen, dass an den Ketten auf Abstand zu den Paddelwellen je ein Paar, jedem Paddel zugeordnete Schubstangen angelenkt sind, wobei jede Schubstange in seitlichen Lagern auf Abstand zur Paddelwelle an den Paddeln verschwenkbar gelagert ist.

Mittels dieser Schubstange wird gewährleistet, dass die Paddel insbesondere in dem Bereich, in dem sie dichtende Funktionen übernehmen, senkrecht zur entsprechenden Oberfläche geführt sind.

Wie bei umlaufenden Ketten an sich bekannt, sieht die Erfindung auch vor, dass die Paddelantriebsketten über ein Paar von seitlichen Kettenrädern geführt sind, wobei wenigstens ein Kettenrad von einem Antriebsmotor beaufschlagt ist.

Um etwa feuchten Dampf in den Eingangsbereich eines derartigen Ofens einbringen zu können, kann nach der Erfindung auch vorgesehen sein, dass zwischen den horizontalen Kettenabschnitten Dampfzuführungen oder dgl. im Gehäuse vorgesehen sind.

Zweckmäßig kann vorgesehen sein, dass das Schleusengehäuse über einen Kurbelantrieb oder dgl. in seiner Höhe zum Ofeneinlaufband verstellbar ist. Mit dieser Gestaltung ist es möglich, die gesamte Schleuse, etwa bei Wartungsarbeiten, vollständig vom Ofeneinlaufband abzuheben und bei Bedarf wieder auf das Einlaufband abzusenken oder je nach Art des Ofenbetriebes und die Schleuse völlig außer Eingriff zu belassen, wenn diese nicht benötigt wird.

Zweckmäßig ist, wie dies die Erfindung ebenfalls vorsieht, der Abstand der Paddel der Einlauflänge der im Ofen zu behandelnden Güter angepasst. Wenn beispielsweise Brotlaibe auf entsprechenden Backblechen oder Backformen zugeführt werden, takten die Paddel genau im Abstand mit dieser geometrischen Länge derartiger Bleche gemessen in Einlaufrichtung.

Die geometrischen Abmessungen sowohl der umlaufenden Ketten als auch der Paddel ist dabei erfindungsgemäß so gewählt, dass wenigstens drei Paddel im gleichen Abstand an den umlaufenden Ketten vorgesehen sind, wobei immer gleichzeitig wenigstens ein Paddel in dichtendem Kontakt mit der Oberfläche des Ofeneinlaufbandes und wenigstens ein Paddel in dichtendem Kontakt mit der gegenüberliegenden Gehäusedichtfläche geführt ist.

Weitere Merkmale, Einzelheiten und Vorteile der Erfindung ergeben sich aufgrund der nachfolgenden Beschreibung sowie anhand der Zeichnungen. Diese zeigt in vereinfachter Darstellung in
- Fig. 1: ein Einlaufbereich eines Durchlaufofens mit der erfindungsgemäßen Schleuse, teilweise geschnitten,
- Fig. 2: in gleicher Darstellung das Ofengehäuse in gegenüber dem Einlaufband angehobener Stellung,
- Fig. 3 bis 6: Schnittdarstellungen der Schleuse mit unterschiedlichen Positionen der Paddel im Umlauf,
- Fig. 7: eine vergrößte Darstellung des Kettenumlaufbereiches mit unterschiedlicher Positionierung des Paddels in gestrichelter Darstellung.

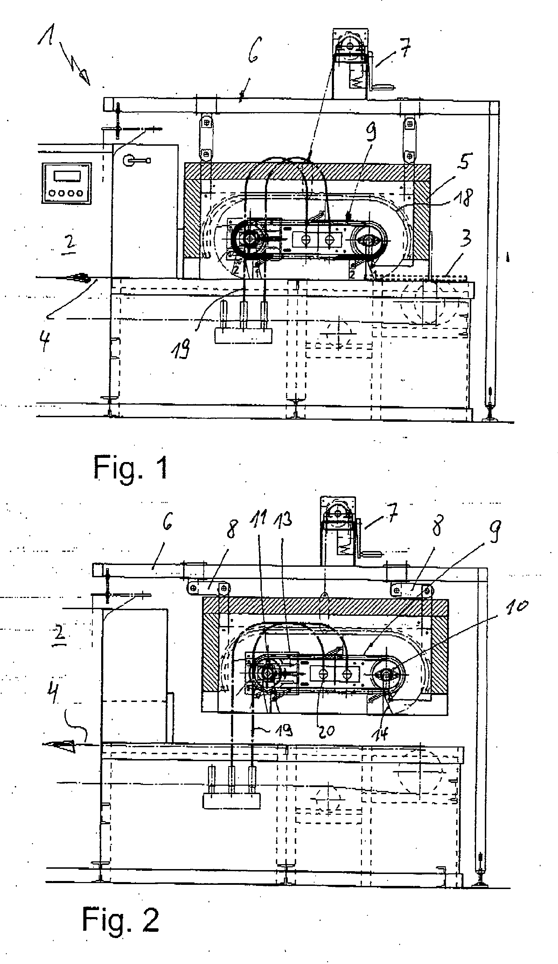

Die allgemein mit 1 bezeichnete Vorrichtung wird zum Verschließen eines kontiuierlich zu beschickenden Ofens, in Fig. 2 lediglich angedeutet und mit 2 bezeichnet, eingesetzt, wobei z.B. ein Backgut tragendes Blech 3 auf ein endlos umlaufendes Förderband 4 gesetzt wird, um in den Ofen 2 gefördert zu werden.

Die Vorrichtung bildet die Ofenschleuse und ist mit einem Gehäuse 5 ausgerüstet, welches an einer Tragkonstruktion 6 vor den Ofen 2 platziert ist. Das Gehäuse 5 kann im dargestellten Beispiel der Fig. 1 und 2 über einen Kurbeltrieb 7 angehoben und abgesenkt werden, hierzu ist das Gehäuse 5 an Scharnierelementen 8 am Gestell 6 befestigt, wobei in Fig. 1 die abgesenkte Funktionsstellung dargestellt ist, während die Fig. 2 die angehobene Position des Gehäuses 5 wiedergibt.

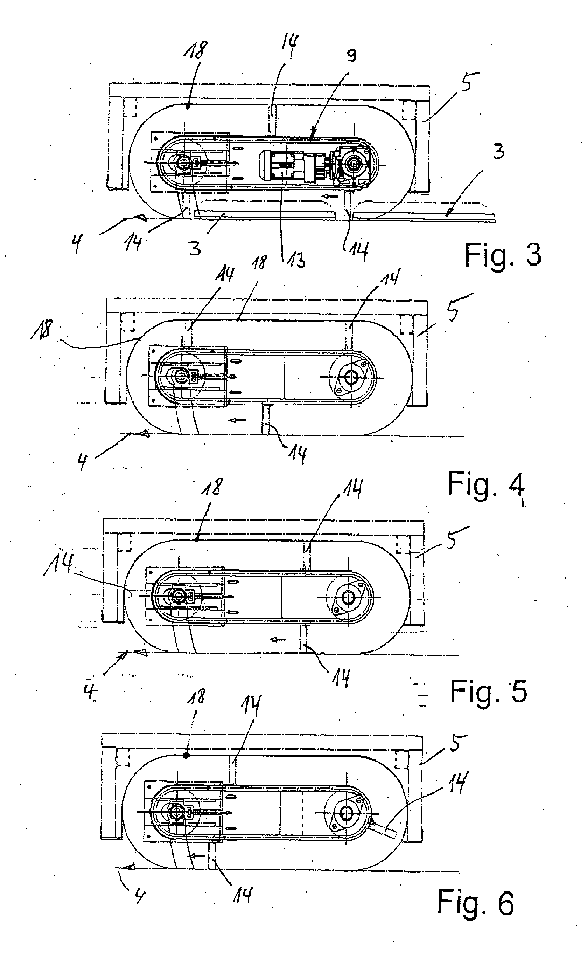

Innerhalb des Gehäuses 5 ist ein Paar von umlaufenden, den stirnseitigen Wandbereichen des Gehäuses 5 zugeordneten Förderketten vorgesehen, die allgemein mit 9 bezeichnet sind, wobei jede Endloskette 9 über ein angetriebenes Kettenradpaar 10 geführt ist und ein gegenüberliegendes Umlenkkettenradpaar 11, das z.B. mit der entsprechenden Kettenspannvorrichtung 12 ausgerüstet ist. Der Antriebsmotor ist allgemein mit 13 bezeichnet (Fig. 3).

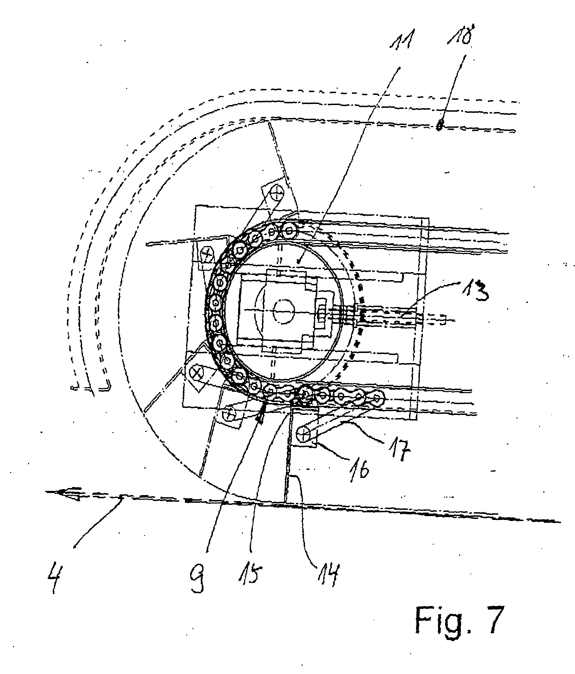

Wie sich insbesondere aus Fig. 7 ergibt, sind an Gliedern der umlaufenden Ketten 9 mit 14 bezeichnete Dichtpaddel an Drehwellen 15 angelenkt, wobei jedes Dichtpaddel 14 beidseitig eine Traglagerfläche 16 für eine Schubstange 17 aufweist, die ihrerseits wiederum an der jeweiligen Förderkette 9 beweglich befestigt ist.

Wie aus Fig. 7 erkennbar, wird durch diese Anordnung der schwenkbaren Paddel 14 über die Schubstangen 17 erreicht, dass das Paddel im Umlauf um das jeweilige Umlenkzahnrad 11 bzw. 10 so geführt wird, dass der dichtende Kontakt mit der jeweils außen liegenden Arbeitsfläche im Wesentlichen aufrechterhalten wird, in den Fig. 3 bis 6 dargestellt.

In den Fig. 3 bis 6 ist auch dargestellt, dass an den umlaufenden Förderketten 9 im dargestellten Beispiel drei Paddel 14 derart in gleichmäßiger Verteilung angeordnet sind, dass der Abstand ausreicht, um zwischen zwei umlaufenden Paddeln 14 den jeweiligen Backgutträger 3 abzuschotten. Dabei sind wenigstens immer zwei der Paddel 14 in dichtendem Eingriff mit der jeweiligen zugeordneten Oberfläche, einmal mit dem in den Ofen einlaufenden Förderband 14 oder mit der entgegengesetzt geformten Innenfläche innerhalb des Vorrichtungsgehäuses 5, die mit 18 bezeichnet ist.

Wie sich aus den Fig. 3 bis 6 ergibt, wird lediglich das Gasvolumen, das durch den Abstand zweier Paddel zueinander in Verbindung mit der jeweiligen Gegenfläche definiert ist, aus dem Ofen ausgetragen bzw. als Kaltluft mit den Backgutträgern in den Ofen eingeschoben.

Natürlich ist das beschriebene Ausführungsbeispiel der Erfindung noch in vielfacher Hinsicht abzuändern, ohne den Grundgedanken zu verlassen. So ist insbesondere auch vorgesehen, dass Dampfzuführleitungen, mit 19 bezeichnet, vorgesehen sind, um über Düsenrohre 20 Dampf auf das einlaufende Backgut sprühen zu können, wobei hier auch andere Möglichkeiten des zusatzes zur Beeinflussung des einlaufenden Gutes vorgesehen sein können.

Ebenso kann die beschriebene Kette z.B. gegen Zahnriemen ausgetauscht werden. Auch kann der Transport von Backgut ohne tragendes Blech direkt auf dem Ofenband erfolgen.

## Patentansprüche

1. Vorrichtung (1) zum Verschließen eines kontunierlich zu beschickenden Ofens (2), insbesondere eines Durchlaufofens für Backwaren,
**dadurch gekennzeichnet,**
**dass** in einem oberhalb und auf Abstand zum in den Ofen (2) einlaufenden Förderband (4) vorgesehenen Gehäuse (5) mehrere an umlaufenden Antriebsketten (9) befestigte, das Förderband berührende Paddel (14) vorgesehen sind, die innerhalb des Gehäuses (5) oberhalb des Einlaufbandes (2) ebenfalls gasdicht geführt sind.

2. Vorrichtung nach Anspruch 1,
**dadurch gekennzeichnet,**
**dass** die Paddel (14) an in den seitlichen Ketten (9) gelagerten wellen angeordnet sind.

3. Vorrichtung nach Anspruch 1 oder 2,
**dadurch gekennzeichnet,**
**dass** an den Ketten auf Abstand zu den Paddelwellen je ein Paar, jedem Paddel zugeordnete Schubstangen angelenkt ist, wobei jede Schubstange in seitlichen Lagern auf Abstand zur Paddelwelle an den Paddeln verschwenkbar gelagert ist.

4. Vorrichtung nach Anspruch 1 oder einem der folgenden,
**dadurch gekennzeichnet,**
**dass** die Paddelantriebsketten (9) über ein Paar von seitlichen Kettenrädern (10,11) geführt sind, wobei wenigstens ein Kettenradpaar (10) von einem Antriebsmotor (13) beaufschlagt ist.

5. Vorrichtung nach Anspruch 1 oder einem der folgenden,
**dadurch gekennzeichnet,**
**dass** zwischen den horizontalen Kettenabschnitten Dampfzuführungen (19) oder dgl. vorgesehen sind.

6. Vorrichtung nach Anspruch 1 oder einem der folgenden,
**dadurch gekennzeichnet,**
**dass** das Schleusengehäuse (5) über einen Kurbelantrieb (7) oder dgl. in seiner Höhe zum Ofeneinlaufband verstellbar ist.

7. Vorrichtung nach Anspruch 1 oder einem der folgenden,
**dadurch gekennzeichnet,**
**dass** der Abstand der Paddel (14) der Einlauflänge der im Ofen zu behandelnden Güter (3) angepasst ist.

8. Vorrichtung nach Anspruch 1 oder einem der folgenden,
**dadurch gekennzeichnet,**
**dass** wenigstens drei Paddel (14) im gleichen Abstand an den umlaufenden Ketten (9) vorgesehen sind, wobei immer gleichzeitig wenigstens ein Paddel (14) in dichtendem Kontakt mit der Oberfläche des Ofeneinlaufbandes (4) und wenigstens ein Paddel (14) in dichtendem Kontakt mit der gegenüberliegenden Gehäusedichtfläche (18) geführt ist.
